(19) **Europäisches Patentamt**
**European Patent Office**
**Office européen des brevets**

(11) **EP 3 837 317 B1**

(12) **EUROPÄISCHE PATENTSCHRIFT**

(45) Veröffentlichungstag und Bekanntmachung des Hinweises auf die Patenterteilung:
**20.04.2022  Patentblatt 2022/16**

(21) Anmeldenummer: **18756236.8**

(22) Anmeldetag: **17.08.2018**

(51) Internationale Patentklassifikation (IPC):
**C08L 83/04** (2006.01)

(52) Gemeinsame Patentklassifikation (CPC):
(C-Sets verfügbar)
**C08L 83/04;** C08G 77/12; C08G 77/20; C08G 77/80
(Forts.)

(86) Internationale Anmeldenummer:
**PCT/EP2018/072353**

(87) Internationale Veröffentlichungsnummer:
**WO 2020/035149 (20.02.2020 Gazette 2020/08)**

(54) **VERNETZBARE ORGANOSILOXAN-ZUSAMMENSETZUNGEN**

CROSSLINKABLE ORGANOSILOXANE COMPOSITIONS

COMPOSITIONS D'ORGANOSILOXANES RÉTICULABLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**23.06.2021  Patentblatt 2021/25**

(73) Patentinhaber: **Wacker Chemie AG**
**81737 München (DE)**

(72) Erfinder: **OSTENDORF, Detlev**
**01129 Dresden (DE)**

(74) Vertreter: **Budczinski, Angelika et al**
**Wacker Chemie AG**
**Intellectual Property**
**Hanns-Seidel-Platz 4**
**81737 München (DE)**

(56) Entgegenhaltungen:
**EP-A1- 0 252 858      WO-A1-2012/129766**
**JP-A- 2017 193 702**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

(52) Gemeinsame Patentklassifikation (CPC): (Forts.)

C-Sets
**C08L 83/04**

**Beschreibung**

Die Erfindung betrifft durch Hydrosilylierungsreaktion vernetzbare Organosiloxan-Zusammensetzungen, Verfahren zu deren Herstellung sowie deren Verwendung und daraus erhältliche Vulkanisate.

Organopolysiloxanharze, die reaktive Einheiten mit aliphatischen Kohlenstoff-Kohlenstoff-Mehrfachbindungen enthalten, können mit geeigneten Kopplern, welche über zwei reaktive SiH-Funktionen verfügen, oder mit Vernetzern mit mindestens drei reaktiven SiH-Funktionen in Gegenwart von - zumeist platinhaltigen - Katalysatoren durch Hydrosilylierungs- bzw. Additionsreaktion vernetzt werden. Der Vorteil von vulkanisierten Organopolysiloxanharzen im Vergleich zu organischen Systemen, wie ungesättigten Polyesterharzen oder Epoxidharzen, liegt in ihrer Eigenschaft, hohe UV- und hohe Hitzebeständigkeit zu kombinieren, begründet. Außerdem weisen Organopolysiloxanharze niedrige Dielektrizitätskonstanten und gute Beständigkeit gegenüber Chemikalien auf. Aus diesen Gründen finden Organopolysiloxanharze Anwendung z.B. als Vergussmasse zur Herstellung elektrischer oder elektronischer Bauteile, insbesondere bei der Herstellung von optischen Halbleiterelementen wie Hochleistungs-LEDs (= Light Emitting Device) und als Isoliermaterial, z.B. in Traktionsmotoren zur Festlegung der Wicklungen und zum Ausfüllen der Hohlräume zwischen den Windungen, sowie als Beschichtungsmaterial. Durch die Verwendung von Fasern, verstärkenden Füllstoffen oder Modifikatoren können die mechanischen Eigenschaften, Festigkeit oder Bruchzähigkeit, optimiert werden um die Einsatzmöglichkeiten von additionsvernetzenden Organopolysiloxanharz-Zusammensetzungen für Anwendungen zu erweitern, in denen höhere Ansprüche an Festigkeit oder Langlebigkeit vorausgesetzt werden. Allerdings sind die vulkanisierten Netzwerke von Organopolysiloxanharzen im Vergleich zu organischen Systemen spröder, was auf eine geringere Duktilität, d.h. auf geringe Fließeigenschaften des Polymernetzwerkes, zurückgeführt werden kann. Die geringen Fließeigenschaften und dadurch bedingt die niedrigere Bruchzähigkeit des Materials sind ebenfalls erkennbar an einer Druckversuchskurve an einem hohen Wert für das Fließverhältnis. Zudem zeigen derartige spröde Materialien typischerweise auch ein inhomogenes Polymernetzwerk und damit einhergehend ein ungünstiges Dämpfungsverhalten, erkennbar an einer tan delta-Messkurve einer dynamisch-mechanischen Analyse (DMA) anhand einer größeren Halbwertsbreite und einer niedrigeren Höhe des Dämpfungsmaximums tan $delta_{max}$ bei der Glasübergangstemperatur (Tg). Dagegen deutet ein einzelner schmaler und hoher tan delta-Peak (= hohe Dämpfung) auf ein homogenes Netzwerk hin, welches im Allgemeinen bei thermoplastischen Materialien mit einer engen Molgewichtsverteilung beobachtet wird; dieses Erscheinungsbild ist aber nicht üblich für ein typisch duroplastisches Material. Umgekehrt zeigen vulkanisierte Netzwerke von Organopolysiloxanharzen, die günstigere Fließeigenschaften, also einen niedrigen Wert für das Fließverhältnis, und damit verbunden höhere Bruchzähigkeiten aufweisen, eher niedrige Festigkeiten, d.h. einen niedrigen Elastizitätsmodul (E-Modul).

In US-A 3,438,936 wird unter anderem die Verwendung eines cyclischen Siloxans (ViMeSiO$_{2/2}$)$_4$ beschrieben, das mit divalenten SiH-Gruppen-haltigen Kopplern über eine Additionsreaktion in Gegenwart von Platin-Katalysator vulkanisiert wird. Die Vulkanisate weisen zwar gute Fließeigenschaften, aber niedrige Festigkeiten, d.h. niedrige E-Modul-Werte, auf.

Die Dokumente WO 2012/129766, EP 0 252 858 und JP 2017 193702 offenbaren in ihren Beispiele 1, 3 und 4 Zusammensetzungen, die ein Cyclosiloxan der Formel (I) des vorliegenden Anspruchs 1, wobei m=3, enthalten. In diesem Zusammensetzungen weist jedoch die Komponente (B) keinen aromatischen Rest. Das Dokument WO 2012/129766 offenbart auch im Beispiel 3 eine ähnliche Zusammensetzung, wobei es ein Cyclosiloxan der Formel (I) mit m=4, sondern ohne R$^2$ Gruppe, gibt.

Die Aufgabe der vorliegenden Erfindung besteht darin durch Additionsreaktion vernetzbare Organosiloxane bereitzustellen, mit denen Vulkanisate mit hoher Festigkeit, d.h. einem hohen E-Modul, und gleichzeitig hoher Bruchzähigkeit, ausgedrückt durch einen kleinen Wert für das Fließverhältnis sowie ein hohes und schmales Dämpfungsmaximum tan $delta_{max}$, erhalten werden können.

Gegenstand der Erfindung sind durch Hydrosilylierungsreaktion vernetzbare Zusammensetzungen enthaltend

(A) Cyclosiloxane der Formel

$$[R_aR^1_bR^2_cSiO_{2/2}] \, m \qquad\qquad (I) \, ,$$

wobei

R Methyl-, n-Butyl-, tert-Butyl-, Cyclohexyl-, n-Octyl-, 2-Ethylhexyl-, 2,2,4-Trimethylpentyl- oder 2,4,4-Trimethylpentylrest darstellt,
R$^1$ Vinyl-, Bicycloheptenyl-, 3a,4,5,6,7,7a-hexahydro-4,7-me-thano-1H-indenyl- oder 2-Propenylrest bedeutet,
R$^2$ Phenylrest, o-, m- oder p-Tolylrest oder Benzylrest bedeutet,
a 0 oder 1 ist,
b 0 oder 1 ist,

c 0, 1 oder 2 ist, und

m gleich 3, 4 oder 5, bevorzugt 3 oder 4, besonders bevorzugt 3, ist,

mit der Maßgabe, dass

a+b+c gleich 2 ist, pro Siloxanmolekül (A) mindestens 3 Reste $R^1$ anwesend sind und pro Siloxanmolekül (A) mindestens m-3 Reste $R^2$ anwesend sind,

(B) Organosiliciumverbindungen mit zwei Si-gebundenen Wasserstoffatomen sowie mindestens einem aromatischen Rest und

(C) die Anlagerung von Si-gebundenem Wasserstoff an aliphatische Mehrfachbindung fördernden Katalysator.

Bevorzugt handelt es sich bei Rest R um den Methylrest.

Bevorzugt handelt es sich bei Rest $R^1$ um den Vinylrest.

Bevorzugt handelt es sich bei Rest $R^2$ um den Phenylrest.

Bevorzugt handelt es sich bei Komponente (A) um Cyclotrisiloxane (A1) der Formel (I) mit m gleich 3, a=b=1 und c=0 oder um aromatische Cyclosiloxane (A2) der Formel (I) mit m gleich 3, 4 oder 5, wobei pro Cyclosiloxanmolekül (A2) mindestens 3 Reste $R^1$ anwesend sind sowie mindestens eine Einheit mit a=0 und b=c=1 anwesend ist.

Bevorzugt handelt es sich bei den Cyclosiloxanen (A2) der Formel (I) um solche mit m gleich 3 oder 4, wobei in mindestens drei der m Einheiten a=0 und b=c=1 ist, insbesondere um Cyclosiloxane der Formel (I) mit m gleich 3, wobei in jeder der m Einheiten a=0 und b=c=1 ist.

Bevorzugt sind pro Siloxanmolekül (A2) mindestens m-2, besonders bevorzugt m-1, insbesondere m Reste $R^2$ anwesend, wobei m und $R^2$ die oben genannte Bedeutung haben.

Beispiele für die erfindungsgemäß eingesetzten Cyclosiloxane (A1) sind $(MeViSiO_{2/2})_3$, $(MeBchSiO_{2/2})_3$, $(MeDcpSiO_{2/2})_3$, wobei Me gleich Methylrest, Bch Bicycloheptenylrest, Dcp 3a,4,5,6,7,7a-hexahydro-4,7-methano-1H-indenylrest und Vi gleich Vinylrest bedeutet.

Beispiele für die erfindungsgemäß eingesetzten Cyclosiloxane (A2) sind $(PhViSiO_{2/2})_5$, $(PhViSiO_{2/2})_4$, $(Ph(Bch)SiO_{2/2})_4$, $(Ph(Dcp)SiO_{2/2})_4$, $(PhViSiO_{2/2})_3$, $(Ph(Bch)SiO_{2/2})_3$, $(Ph(Dcp)SiO_{2/2})_3$, $(PhMeSiO_{2/2})_1(PhViSiO_{2/2})_3$, $(PhMeSiO_{2/2})_2(PhViSiO_{2/2})_3$, $(Ph_2SiO_{2/2})_1(PhViSiO_{2/2})_3$, $(MeViSiO_{2/2})_1(PhViSiO_{2/2})_3$, $(MeViSiO_{2/2})_2(PhViSiO_{2/2})_2$, $(MeViSiO_{2/2})_2(PhViSiO_{2/2})_3$, $(MeViSiO_{2/2})_1(PhViSiO_{2/2})_2$ und $(MeViSiO_{2/2})_3(PhMeSiO_{2/2})_1$, wobei Me gleich Methylrest, Vi gleich Vinylrest, Bch gleich Bicycloheptenyl-, Dcp gleich 3a,4,5,6,7,7a-hexahydro-4,7-methano-1H-indenylrest und Ph gleich Phenylrest bedeutet.

Bei den erfindungsgemäß eingesetzten Cyclosiloxanen (A2) handelt es sich bevorzugt um $(Ph(Bch)SiO_{2/2})_4$, $(Ph(Dcp)SiO_{2/2})_4$, $(Ph(Bch)SiO_{2/2})_3$, $(Ph(Dcp)SiO_{2/2})_3$, $(PhViSiO_{2/2})_3$, $(PhViSiO_{2/2})_4$ oder $(PhViSiO_{2/2})_5$, wobei $(PhViSiO_{2/2})_3$ oder $(PhViSiO_{2/2})_4$ besonders bevorzugt sind, wobei Me gleich Methylrest, Vi gleich Vinylrest, Bch gleich Bicycloheptenylrest, Dcp gleich 3a,4,5,6,7,7a-hexahydro-4,7-methano-1H-indenylrest und Ph gleich Phenylrest bedeutet.

Bei Komponente (A2) kann es sich um eine Art aromatischer Cyclosiloxane handeln oder um ein Gemisch unterschiedlicher Arten aromatischer Cyclosiloxanen, wobei Gemische bevorzugt sind, insbesondere Gemische von aromatischen Cyclosiloxanen der Formel (I) mit m gleich 3 oder 4.

Falls es sich bei der erfindungsgemäß eingesetzten Komponente (A2) um ein Gemisch aus aromatischen Cyclosiloxanen der Formel (I) handelt mit m gleich 3, 4 oder 5, bevorzugt 3 oder 4, ist die Summe der aromatischen Cyclosiloxane (A2) der Formel (I) mit m=3 oder 4, bezogen auf die Summe aller aromatischen Cyclosiloxane (A2) der Formel (I), vorzugsweise mindestens 0,70, bevorzugt mindestens 0,80, besonders bevorzugt mindestens 0,90, insbesondere mindestens 0,95. Vorzugsweise ist die Summe der aromatischen Cyclosiloxane (A2) der Formel (I) mit m=3, bezogen auf die Summe aller aromatischen Cyclosiloxane (A2) der Formel (I), mindestens 0,10, bevorzugt mindestens 0,20, besonders bevorzugt mindestens 0,30, insbesondere mindestens 0,40.

Bei den Cyclosiloxanen (A) handelt es sich um handelsübliche Produkte bzw. sind sie nach in der Chemie gängigen Verfahren herstellbar, z.B. durch Hydrolyse und Kondensation der entsprechenden Dichlorsilane ggf. in Gegenwart einer Hilfsbase; durch Umsetzung der entsprechenden Dichlorsilane mit "Sauerstoffspendern" wie Alkalimetallcarbonaten, Alkalimetallhydrogencarbonaten, Erdalkalimetallcarbonaten, Erdalkalimetallhydrogencarbonaten, Metalloxiden, wie Zinkoxid, oder Alkoholen, wie tert-Butylalkohol, ggf. in Gegenwart einer Hilfsbase, wie z.B. Pyridin, Alkylamin, Alkalihydroxid, Alkaliethanolat, Alkalimethanolat, wobei die Synthesen üblicherweise in gängigen, Lösungsmitteln wie z.B. Toluol, Aceton, Methylethylketon, Ethylacetat, Diethylether, Dibutylether, Methyl-tert-butylether, Tetrahydrofuran, Chloroform, Pentan, Hexan, Heptan, Isopar™ E oder Tetrachlormethan, durchgeführt werden; oder durch Umsetzung von 1,1,3,3-substituierten 1,3-Dihydroxydisiloxanen mit 1,1,3,3-substituierten 1,3-Dichlordisiloxanen bzw. substituierten Dichlorsilanen und einer Hilfsbase wie Pyridin oder Alkylamin gegebenenfalls in einem Lösungsmittel wie Toluol.

Bevorzugt werden die erfindungsgemäß eingesetzten phenylhaltigen Cyclosiloxane (A2) entsprechend den Ausführungsbeispielen, wie in Zuev, V., Kalinin, A. V., Phosphorus Sulfur and Silicon, 178:1289-1294, 2003 (DOI:

10.1080/10426500390200585) beschrieben, hergestellt, z.B. durch Umsetzung der entsprechenden Dichlorsilane mit Natriumhydrogencarbonat als Sauerstoffspender und Pyridin als Hilfsbase in Toluol, Aceton, Ethylacetat oder Methylethylketon.

Bei der erfindungsgemäß eingesetzten Komponente (B) kann es sich um beliebige und bisher bekannte Organosiliciumverbindungen handeln, die zwei Si-gebundene Wasserstoffatome und mindestens einen aromatischen Rest aufweisen, wie z.B. SiH-funktionelle Silane und Siloxane.

Bevorzugt handelt es sich bei Koppler (B) um Organosiliciumverbindungen enthaltend Einheiten der Formel

$$R^4_e H_f R^5_g SiO_{(4-e-f-g)/2} \qquad (II),$$

worin

R$^4$ gleich oder verschieden sein kann und einen einwertigen oder zweiwertigen, SiC-gebundenen, gegebenenfalls substituierten, aliphatisch gesättigten Kohlenwasserstoffrest bedeutet,

R$^5$ gleich oder verschieden sein kann und einen einwertigen oder zweiwertigen, SiC-gebundenen, gegebenenfalls substituierten, aromatischen, aliphatisch gesättigten Kohlenwasserstoffrest bedeutet,

e 0, 1, 2 oder 3, bevorzugt 0, 1 oder 2, besonders bevorzugt 1 oder 2, ist,

f 0, 1 oder 2, bevorzugt 1 oder 2, ist und

g 0, 1 oder 2, bevorzugt 1 oder 2, ist,

mit der Maßgabe, dass e+f+g ≤ 4 ist sowie pro Molekül zwei Si-gebundene Wasserstoffatome und mindestens ein aromatischer Rest anwesend sind.

Bevorzugt enthalten Koppler (B) pro Molekül 1 bis 4, besonders bevorzugt 1 bis 2, Reste R$^5$.

Bevorzugt enthalten Koppler (B) pro Molekül mindestens einen Rest R$^5$ gleich einem zweiwertigen, SiC-gebundenen, aromatischen, aliphatisch gesättigten Kohlenwasserstoffrest, der insbesondere zwei Einheiten der Formel (II) miteinander verbindet.

Beispiele für Reste R$^4$ sind Alkylreste, wie der Methyl-, Ethyl-, n-Propyl-, iso-Propyl-, 1-n-Butyl-, 2-n-Butyl-, iso-Butyl-, tert-Butyl-, n-Pentyl-, iso-Pentyl-, neo-Pentyl-, tert-Pentylrest; Hexylreste, wie der n-Hexylrest; Heptylreste, wie der n-Heptylrest; Octylreste, wie der n-Octylrest und iso-Octylreste, wie der 2,4,4-Trimethylpentyl- und der 2,2,4-Trimethylpentylrest; Nonylreste, wie der n-Nonylrest; Decylreste, wie der n-Decylrest; Dodecylreste, wie der n-Dodecylrest; Hexadecylrest, wie der n-Hexadecylrest; Octadecylreste, wie der n-Octadecylrest; Cycloalkylreste, wie der Cyclopentyl-, Cyclohexyl-, Cycloheptylrest und Methylcyclohexylrest, sowie der Methylen-, Ethylen-, Dimethylmethylen- und Methylmethylenrest, bevorzugt der Methylrest.

Beispiele für Reste R$^5$ sind Arylreste, wie der Phenyl-, Biphenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest, der 2-(2-Methylphenyl)ethylrest, der 2-(3-Methylphenyl)-ethylrest, 2-(4-Methylphenyl)ethylrest, der 2-Phenylpropenylrest und der 2-Phenyl-iso-propenylrest, sowie der Phenylen-, Methyl(phenyl)methylenrest, Phe-nylmethylen-, Diphenylmethylenrest, -(C$_6$H$_4$)-CH$_2$-(C$_6$H$_4$)-, -(C$_6$H$_4$)-C(CH$_3$)$_2$-(C$_6$H$_4$)-, -(C$_6$H$_4$)-C(CH$_3$)H-(C$_6$H$_4$)-, -(C$_6$H$_4$)-C(C$_6$H$_4$)-, (C$_6$H$_4$)-C(C$_6$H$_5$)$_2$-(C$_6$H$_4$)-, -(C$_6$H$_4$)-O-(C$_6$H$_4$)-, -(C$_6$H$_4$)-S-(C$_6$H$_4$)-, sowie zweiwertiger Biphenyl-, Naphthalin-, Anthracen- oder Phenanthrenrest, wobei der Phenylrest, der zweiwertige Biphenylrest oder der Phenylenrest bevorzugt sind.

Beispiele für Koppler (B) sind Phenylsilane, wie Diphenylsilan (CAS 775-12-2), Methyl(phenyl)silan (CAS 766-08-5); Koppler mit Siloxaneinheiten, wie 1,3-Dimethyl-1,3-diphenyldisiloxan (CAS 6689-22-1), 1,1,3-Trimethyl-3-phenyldisiloxan, 1,5-Dimethyl-1,3,3,5-tetraphenyltrisiloxan, 1,1,3,3-Tetraphenyldisiloxan, 1,1,5,5-Tetramethyl-3,3-diphenyltrisiloxan, 1,1,3,5,5-Pentamethyl-3-phenyltrisiloxan; Koppler mit Phenylen- und zweiwertigen Biphenyleinheiten, wie 1,4-Bis(dimethylsilyl)benzol (CAS 2488-01-9), 1,4-Bis(methylphenylsilyl)benzol, 4,4'-Bis(dimethylsilyl)-1,1'-biphenyl, Bis(4'-(dimethylsilyl)-[1,1'-biphenyl]-4-yl)dimethylsilan, 4,4'-Bis(methylphenylsilyl)-1,1'-biphenyl, Bis(4-(dimethylsil-lyl)phenyl)dimethylsilan, Bis(4-(dimethylsilyl)phenyl)(ethyl)methylsilan, Bis(4-(dimethylsilyl)phenyl)diethylsilan, Bis(4-(dimethylsilyl)phenyl)di-n-butylsilan, Bis(4-(dimethylsilyl)phenyl)di-tert-butyl-silan, Bis(4-(dimethylsilyl)phenyl)dipropylsilan, Bis(4-(dime-thylsilyl)phenyl)di-iso-propylsilan, Bis(4-(dimethylsilyl)phenyl)methan, 2,2-Bis(4-(dimethylsilyl)phenyl)propan; Koppler mit mehrcyclischen zweiwertigen aromatischen Kohlenwasserstoffen, wie 9,10-Bis(dimethylsilyl)anthracen, 1,4-Bis(di-methylsilyl)naphthalin, 1,5-Bis(dimethylsilyl)naphthalin, 2,6-Bis(dimethylsilyl)naphthalin, 1,8-Bis(dimethylsilyl)naphthalin, 1,6-Bis(dimethylsilyl)naphthalin, 1,7-Bis(dimethylsilyl)naphthalin; sowie Bis(4-(dimethylsilyl)-phenyl)ether, Bis(4-(dimethylsilyl)phenyl)sulfid.

Bevorzugt handelt es sich bei erfindungsgemäß eingesetztem Koppler (B) um Organosiliciumverbindungen wie Diphenylsilan, 1,3-Dimethyl-1,3-diphenyl-disiloxan, 1,1,5,5-Tetramethyl-3,3-diphenyltrisiloxan, 1,4-Bis(dimethylsil-lyl)benzol, 4,4'-Bis(di-methylsilyl)-1,1'-biphenyl, Bis(4'-(dimethylsilyl)-[1,1'-biphenyl]-4-yl)dimethylsilan, Bis(4-(dimethyl-silyl)phenyl)dimethyl-silan, Bis(4-(dimethylsilyl)phenyl)methan, Bis(4-(dimethylsilyl)phenyl)ether oder Bis(4-(dimethyl-silyl)phenyl)sulfid.

Besonders bevorzugt handelt es sich bei erfindungsgemäß eingesetztem Koppler (B) um Diphenylsilan, 1,4-Bis(dimethylsilyl)-benzol, 1,3-Dimethyl-1,3-diphenyl-disiloxan, 4,4'-Bis(dimethyl-silyl)-1,1'-biphenyl oder Bis(4-(dime-thylsilyl)phenyl)dimethyl-silan, insbesondere um 1,4-Bis(dimethylsilyl)benzol, 4,4'-Bis(dimethylsilyl)-1,1'-biphenyl, 1,3-Dimethyl-1,3-diphenyl-disiloxan oder Bis(4-(dimethylsilyl)phenyl)dimethylsilan.

Bei Koppler (B) handelt es sich um handelsübliche Produkte bzw. können sie nach in der Chemie gängigen Verfahren hergestellt werden, z.B. durch Grignard-Reaktion.

In den erfindungsgemäßen Zusammensetzungen werden Komponenten (A) und (B) in solchen Mengen eingesetzt, dass das Molverhältnis von Si-gebundenem Wasserstoff zu aliphatisch ungesättigten Kohlenstoff-Kohlenstoff-Mehrfachbindungen vorzugsweise 0,80 bis 1,20, bevorzugt 0,85 bis 1,10, besonders bevorzugt 0,90 bis 1,10, insbesondere 0,95 bis 1,05, beträgt.

Als Katalysatoren (C) können alle Katalysatoren eingesetzt werden, die auch bisher zur Anlagerung von Si-gebundenem Wasserstoff an aliphatische Mehrfachbindung eingesetzt wurden.

Beispiele für Katalysatoren (C) sind Metalle, wie Platin, Rhodium, Palladium, Ruthenium und Iridium, vorzugsweise Platin, die gegebenenfalls auf feinteiligen Trägermaterialien, wie Aktivkohle, Aluminiumoxid oder Siliciumdioxid, fixiert sein können.

Vorzugsweise werden als Katalysator (C) Platin sowie dessen Verbindungen und Komplexe verwendet.

Beispiele für solche Platinkatalysatoren (C) sind metallisches und feinverteiltes Platin, das sich auf Trägern, wie Siliciumdioxid, Aluminiumoxid oder Aktivkohle befinden kann, Verbindungen oder Komplexe von Platin, wie Platin-halogenide, z.B. $PtCl_4$, $H_2PtCl_6 \cdot 6H_2O$, $Na_2PtCl_4 \cdot 4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzung-sprodukten aus $H_2PtCl_6 \cdot 6H_2O$ und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picol-in)-platindichlorid, Trimethylendipyridinplatindichlorid, Dicyclopentadienplatindichlorid, Dimethylsulfoxydethylenpla-tin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370 sowie Platin-Komplexe mit N-heterocyclischen Carbenen (NHC) wie [1,3-Bis(2,6-diisopropylphenyl)imidazol-2-yliden] [1,3-divinyl-1,1,3,3-tetramethyldisiloxanlplatin(0) (CAS 849830-54-2), [1,3-Bis(2,6-diisopropylphenyl)-imidazolidinyli-den] [1,3-divinyl-1,1,3,3-tetramethyldisiloxan]platin(0) (CAS 873311-51-4), [1,3-Bis(cyclohexyl)imidazol-2-yliden] [1,3-divi-nyl-1,1,3,3-tetramethyldisiloxan]platin(0) (CAS 400758-55-6), 1,3-Bis-(2,4,6-trimethylphenyl)-3,4,5,6-tetrahydropyrimidin-1-ium-platin-(divinyltetramethyldisiloxan), 1,3-Bis-(2,6-dimethylphenyl)-3,4,5,6-tetrahydropyrimidin-1-ium-platin-(divinyl-tetramethyldisiloxan) und 1,3-Bis-(2-methylphenyl)-3,4,5,6-tet-rahydropyrimidin-1-ium-platin-(divinyltetramethyldisiloxan).

Bevorzugt wird als Katalysator (C) der in der Literatur lange als Karstedt Katalysator bekannte Platin-1,3-Divinyl-1,1,3,3-tetramethyldisiloxan-Komplex (CAS 68478-92-2) eingesetzt. Katalysator (C) wird in den erfindungsgemäßen Zubereitungen vorzugsweise in Mengen von 1 bis 5000 Gew.-ppm (Gewichtsteilen je Million Gewichtsteilen), bevorzugt in Mengen von 1 bis 2000 Gew.-ppm, insbesondere in Mengen von 1 bis 500 Gew.-ppm, jeweils berechnet als elementares Metall, bevorzugt elementares Platin, und bezogen auf das Gesamtgewicht der Komponenten (A) und (B), eingesetzt.

Ganz besonders bevorzugt wird in den erfindungsgemäßen Zubereitungen als Katalysator (C) Karstedt Katalysator (CAS 68478-92-2) in Mengen von 5 bis 100 Gew.-ppm, berechnet als elementares Platin und bezogen auf das Gesamtgewicht der Komponenten (A) und (B) eingesetzt.

In einer bevorzugten Ausführungsform wird Katalysator (C) im Gemisch mit Inhibitor (D) eingesetzt.

Zusätzlich zu den Komponenten (A), (B) und (C) können die erfindungsgemäßen Zusammensetzungen weitere Stoffe enthalten, die unterschiedlich sind zu Komponenten (A), (B) und (C), wie z.B. Inhibitoren (D), Zusatzstoffe (E) sowie Lösungsmittel (F).

Die erfindungsgemäßen Zusammensetzungen können Inhibitoren (D) enthalten, bei denen es sich um die gleichen handeln kann, die auch bisher in durch Hydrosilylierungsreaktion vernetzbaren Massen verwendet wurden und die Anlagerung von Si-gebundenem Wasserstoff an aliphatische Kohlenstoff-Kohlenstoff-Mehrfachbindungen bei Raumtemperatur verzögern bzw. mit denen die Verarbeitungszeit und Vernetzungsgeschwindigkeit gezielt eingestellt werden können.

Beispiele für gegebenenfalls eingesetzte Inhibitoren (D) sind acetylenische Alkohole, wie 1-Ethinylcyclohexan-1-ol, 3,5-Dimethyl-l-hexin-3-ol, 2-Phenyl-3-butin-2-ol und 2-Methyl-3-butin-2-ol, lineare vinylterminierte Polydimethylsiloxane, Trialkylcyanurate, Maleate, wie Diallylmaleat, Dimethylmaleat und Bis(2-methoxy-1-methylethyl)maleat, Alkylfumarate, wie Diethylfumarat und Diallylfumarat, organische Hydroperoxide, wie Cumolhydroperoxid, tert.-Butylhydroperoxid und Pinanhydroperoxid, organische Peroxide, organische Sulfoxide, organische Amine und Amide, Phosphine und Phosphite, Phosphonite, Phosphinite, Nitrile, Diaziridine und Oxime sowie Alkylthioharnstoffe, Thiurammonosulfide und -disulfide.

Bevorzugt handelt es sich bei den gegebenenfalls eingesetzten Inhibitoren (D) um 1-Ethinylcyclohexan-1-ol oder Thiurammonosulfide, besonders bevorzugt um Thiurammonosulfide.

Falls Inhibitor (D) eingesetzt wird, handelt es sich um Mengen von vorzugsweise 5 bis 5000 Gew.-ppm, besonders bevorzugt von 10 bis 2000 Gew.-ppm, insbesondere von 20 bis 1000 Gew.-ppm, jeweils bezogen auf das Gesamtgewicht der Komponenten (A) und (B). Die erfindungsgemäßen Zusammensetzungen enthalten bevorzugt Inhibitor (D).

Die additionsvernetzende erfindungsgemäße Zusammensetzung kann so eingestellt werden, dass sie nach Vereinigung aller sie bildenden Einzelkomponenten bei Temperaturen von -50°C bis 30°C über längere Zeiträume, insbesondere mehrere Wochen bis mindestens 2 Monaten, bevorzugt bis zu mindestens 3 Monaten, besonders bevorzugt bis zu mindestens 4 Monaten, insbesondere bis zu mindestens 5 Monaten, lagerstabil ist.

Ebenso ist es möglich die erfindungsgemäßen Zubereitungen so einzustellen, dass nach Vereinigung aller sie ausmachenden Komponenten nur eine begrenzte Verarbeitungszeit (Topfzeit) bis zur beginnenden Aushärtung verbleibt. Dazu wird entweder kein Inhibitor (D) zugesetzt oder es wird beispielsweise 1-Ethinyl-cyclohexan-1-ol, 2-Methyl-3-butin-2-ol, 3-Methyl-1-pentin-3-ol, 2,5-Dimethyl-3-hexin-2,5-diol, 2,5-Dimethyl-1-hexin-3-ol oder 3,7-Dimethyloct-1-in-6-en-3-ol eingesetzt, welche die Additionsreaktion weniger stark inhibieren, wobei die Aufzählung der Inhibitoren hier nur beispielhaft und nicht limitierend zu verstehen ist.

Bei erfindungsgemäß gegebenenfalls eingesetzter Komponente (E) handelt es sich bevorzugt um Weichmacher, Haftvermittler, lösliche Farbstoffe, anorganische und organische Pigmente, Fluoreszenzfarbstoffe, Fungizide, Duftstoffe, Dispergierhilfsmittel, rheologische Additive, Korrosionsinhibitoren, Oxidationsinhibitoren, Lichtschutzmittel, Hitzestabilisatoren, flammabweisend machende Mittel, Mittel zur Beeinflussung der Klebrigkeit, Mittel zur Beeinflussung der elektrischen Eigenschaften, Mittel zur Verbesserung der Wärmeleitfähigkeit; Modifikatoren zur Erhöhung der Festigkeit, der Glasübergangstemperatur und/oder Bruchzähigkeit; verstärkende und nicht verstärkende Füllstoffe; sowie Fasergewebe bestehend aus Glas, Kohlenstoff oder Kunststoff; oder Kombinationen hiervon.

Falls die erfindungsgemäßen Zusammensetzungen Komponente (E) enthalten, handelt es sich jeweils um Mengen von bevorzugt 0,1 bis 200 Gewichtsteilen, besonders bevorzugt 0,1 bis 100 Gewichtsteilen, insbesondere 0,1 bis 50 Gewichtsteilen, jeweils bezogen auf 100 Gewichtsteile der Summe der Komponenten (A) und (B). Die erfindungsgemäßen Zusammensetzungen enthalten bevorzugt keine Komponente (E).

Beispiele für gegebenenfalls eingesetztes Lösungsmittel (F) sind Ketone, wie Methyl-iso-butylketon, Methylethylketon, Methyl-iso-amylketon, Di-iso-butyl-keton, Aceton, Cyclohexanon, Diethylketon, 2-Hexanon, Acetylaceton und Butan-2,3-dion; Ester, wie Ethylacetat, Ethylenglykoldiacetat, gamma-Butyrolacton, 2-Methoxy-propylacetat (MPA), Di(propylenglycol)dibenzoat und Ethyl(ethoxy)propionat, Methylacetoacetat, Ethylacetoacetat, n-Butylacetoacetat, Methylacetat, n-, sec- oder tert-Butylacetat, 2-Hydroxypropionsäurebutylester, Propionsäureethylester, 2-Hydroxypropionsäureethylester und Maleinsäuredimethylester; Amide, wie N,N-Dimethylformamid, N,N-Dimethylacetamid, N-Methyl-2-pyrrolidon und N-Ethyl-2-pyrrolidon; Nitrile, wie Acetonitril, Propionitril, 3-Methoxypropionitril; Acetale, wie Methylal, Ethylhexylal, Butylal, 1,3-Dioxolan, 1,3,5-Trioxan und Glycerinformal; Ether, wie Methyl-tert-butylether, Tetrahydrofuran (THF), Diphenylether, Allylphenylether, Benzylphenylether, Cyclohexylphenylether, Methylphenylether, Tetrahydropyran, 4-Me-ithyltetrahydropyran, Butylphenylether, Dibenzylether, Anisol, 2-Methyltetrahydrofuran, Cyclopentylmethylether, Dibutylether, Diethylether, Mono-, Di-, Tri- oder Tetraethylenglycoldimethylether, Ethylenglycoldibutylether, Ethylmethylether und 1,4-Dio-ixan; Sulfoxide, wie Dimethylsulfoxid, Dipropylsulfoxid und Dibutylsulfoxid; gesättigte Kohlenwasserstoffe, wie n-Pentan, n-Hexan, Cyclohexan, n-Heptan, n-Octan und isomere Octane, wie 2-Ethylhexan, 2,4,4-Trimethylpentan, 2,2,4-Trimethylpentan und 2-Me-thylheptan, sowie Gemische gesättigter Kohlenwasserstoffe mit Siedebereichen zwischen 60-300°C, wie sie unter den Handelsnamen Exxsol™, Isopar™, Hydroseal® oder Shellsol® erhältlich sind; aromatische Kohlenwasserstoffe, wie Benzol, Toluol, o-, m- oder p-Xylol, Solvent Naphtha und Mesitylen; Acetale, wie Methylal, Ethylhexylal, Butylal, 1,3-Dioxolan und Glycerinformal; Carbonate, wie 1,3-Dioxolan-2-on, Diethylcarbonat, Dimethylcarbonat, Di-propylcarbonat, Propylenglycolcarbonat und Ethylencarbonat; Chloroform; Dichlormethan sowie Mischungen hiervon.

Bevorzugte gegebenenfalls eingesetzte Lösungsmittel (F) sind aromatische Lösungsmittel oder gesättigte Kohlenwasserstoffe. Falls die erfindungsgemäßen Zusammensetzungen Lösungsmittel (F) enthalten, handelt es sich um Mengen von bevorzugt 0,001 bis 20 Gewichtsteilen, besonders bevorzugt 0,01 bis 10 Gewichtsteilen, insbesondere 0,01 bis 5 Gewichtsteilen, jeweils bezogen auf 100 Gewichtsteile der Summe der Komponenten (A) und (B). Die erfindungsgemäßen Zusammensetzungen enthalten bevorzugt kein Lösungsmittel (F).

Herstellungsbedingt können bei der Synthese von Cyclosiloxan (A) auch Nebenprodukte entstehen, die nicht der erfindungsgemäß eingesetzten Komponente (A) entsprechen. Beispielsweise können bei der Synthese von Komponente (A) herstellungsbedingt auch lineare, d.h. offenkettige, Siloxane entstehen, welche an den terminalen Siloxaneinheiten Silanolgruppen und/oder Alkoxygruppen tragen. Falls bei der Herstellung von Komponenten (A) Nebenprodukte entstehen, werden diese bevorzugt nicht abgetrennt, sondern liegen im Gemisch mit Cyclosiloxanen (A) vor.

Vorzugsweise handelt es sich bei den erfindungsgemäßen Zusammensetzungen um solche, enthaltend

(A1) Cyclotrisiloxane,
(B) Koppler,
(C) Katalysator,
gegebenenfalls (D) Inhibitor,
gegebenenfalls (E) Zusatzstoffe und
gegebenenfalls (F) Lösungsmittel.

Bevorzugt handelt es sich bei den erfindungsgemäßen Zusammensetzungen um solche, enthaltend

(A1) Cyclotrisiloxane,
(B) Koppler mit mindestens einem Rest $R^5$ gleich einem zweiwertigen, SiC-gebundenen, gegebenenfalls substituierten, aromatischen, aliphatisch gesättigten Kohlenwasserstoffrest, der zwei Einheiten der Formel (II) miteinander verbindet,
(C) Katalysator,
(D) Inhibitor,
gegebenenfalls (E) Zusatzstoffe und
gegebenenfalls (F) Lösungsmittel.

In einer weiteren bevorzugten Ausführungsform handelt es sich bei den erfindungsgemäßen Zusammensetzungen um solche, enthaltend

(A2) aromatische Cyclosiloxane,
(B) Koppler,
(C) Katalysator,
gegebenenfalls (D) Inhibitor,
gegebenenfalls (E) weitere Bestandteile und
gegebenenfalls (F) Lösungsmittel.

In einer weiteren besonders bevorzugten Ausführungsform handelt es sich bei den erfindungsgemäßen Zusammensetzungen um solche, enthaltend

(A2) aromatische Cyclosiloxane,
(B) Koppler mit mindestens einen Rest $R^5$ gleich einem zweiwertigen, SiC-gebundenen, gegebenenfalls substituierten, aromatischen, aliphatisch gesättigten Kohlenwasserstoffrest, der zwei Einheiten der Formel (II) miteinander verbindet,
(C) Katalysator,
(D) Inhibitor,
gegebenenfalls (E) weitere Bestandteile und
gegebenenfalls (F) Lösungsmittel.

Die erfindungsgemäßen Zusammensetzungen enthalten außer den Komponenten (A), (B), (C), den gegebenenfalls eingesetzten Komponenten (D) bis (F) sowie den gegebenenfalls bei der Herstellung der Komponente (A) entstehenden Nebenprodukten bevorzugt keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Die erfindungsgemäßen Zusammensetzungen können bei 23°C und 1013 hPa fest oder flüssig sein, wobei sie bei 23°C und 1013 hPa bevorzugt flüssig sind.

Falls die erfindungsgemäßen Zusammensetzungen bei 23°C und 1013 hPa flüssig sind, haben sie eine dynamische Viskosität von bevorzugt 1 bis 100 000 mPa·s, besonders bevorzugt von 10 bis 50 000 mPa·s, insbesondere von 100 bis 10 000 mPa·s, jeweils bei 23°C.

Die Herstellung der erfindungsgemäßen Zusammensetzungen kann nach bekannten Verfahren erfolgen, wie beispielsweise durch Mischen der einzelnen Komponenten in beliebiger Reihenfolge und auf bisher bekannte Art und Weise.

Ein weiterer Gegenstand der vorliegenden Erfindung ist ein Verfahren zur Herstellung der erfindungsgemäßen Zusammensetzungen durch Vermischung der einzelnen Komponenten.

Bei dem erfindungsgemäßen Verfahren kann das Vermischen bei Temperaturen im Bereich von bevorzugt 10 bis 40°C erfolgen. Falls erwünscht, kann das Vermischen aber auch bei höheren Temperaturen erfolgen, z.B. bei Temperaturen im Bereich von 40 bis 100°C, wobei der Zusammensetzung bevorzugt ein Inhibitor (D) hinzugefügt wird.

Bevorzugt wird bei der Temperatur gemischt, die sich beim Vermischen bei Umgebungstemperatur aus der Temperatur der Rohstoffe plus der Temperaturerhöhung durch den Energieeintrag beim Mischen ergibt, wobei nach Bedarf geheizt oder gekühlt werden kann.

Das Vermischen kann beim Druck der umgebenden Atmosphäre, also etwa 900 bis 1100 hPa, erfolgen. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen oder bei Überdruck zu arbeiten, wie bei Drücken zwischen 1100 hPa und 3000 hPa Absolutdruck, insbesondere bei kontinuierlicher Arbeitsweise, wenn z.B. sich diese Drücke bei geschlossenen Systemen durch den Druck beim Pumpen und durch den Dampfdruck der eingesetzten Materialien bei erhöhten Temperaturen ergeben.

Das erfindungsgemäße Verfahren kann kontinuierlich, diskontinuierlich oder semikontinuierlich durchgeführt werden, bevorzugt wird es diskontinuierlich durchgeführt.

Bei einer bevorzugten Ausführungsform des erfindungsgemäßen Verfahrens zur Herstellung der erfindungsgemäßen Zusammensetzungen werden die Bestandteile (A), (B) und (C) sowie die gegebenenfalls eingesetzten Komponenten (D), (E) und (F) in beliebiger Reihenfolge vermischt.

Besonders bevorzugt werden bei dem erfindungsgemäßen Verfahren die Komponenten (A) und (B) sowie die gegebenenfalls eingesetzten Komponenten (D), (E) und (F) in beliebiger Reihenfolge vorgemischt und dann Komponente (C), gegebenenfalls als Mischung mit Komponente (F), hinzugefügt.

In einer weiteren besonders bevorzugten Ausführungsform werden bei dem erfindungsgemäßen Verfahren die Komponenten (A) und (B) sowie die gegebenenfalls eingesetzten Komponenten (E) und (F) in beliebiger Reihenfolge vorgemischt und dann eine Mischung von Komponenten (C) und (D), gegebenenfalls als Mischung mit Komponente (F), hinzugefügt.

In einer weiteren besonders bevorzugten Ausführungsform werden bei dem erfindungsgemäßen Verfahren die Komponente (A) sowie die gegebenenfalls eingesetzten Komponenten (E) und (F) in beliebiger Reihenfolge vorgemischt und dann eine Mischung von Komponenten (B) und (C), gegebenenfalls eingesetzter Komponente (D), und gegebenenfalls eingesetzte Komponente (F), hinzugefügt.

Die erfindungsgemäßen bzw. erfindungsgemäß hergestellten Mischungen werden bevorzugt vor dem Aushärten entgast.

Die erfindungsgemäße Vernetzung erfolgt bevorzugt bei Temperaturen im Bereich von 50 bis 270°C, besonders bevorzugt von 70 bis 200°C, insbesondere von 140 bis 200°C. Ganz besonders bevorzugt erfolgt die erfindungsgemäße Vernetzung zunächst bei Temperaturen von 100 bis 200°C, woran sich ein Nachhärtungsschritt bei 210 bis 270°C anschließt.

Die erfindungsgemäße Vernetzung erfolgt bevorzugt beim Druck der umgebenden Atmosphäre, also etwa 900 bis 1100 hPa, sie kann aber auch bei erhöhtem Druck, also von 1200 hPa bis 10 MPa erfolgen.

Die erfindungsgemäße Vernetzung kann unter Luft- oder Schutzgasatmosphäre, wie Stickstoff oder Argon, stattfinden. Bevorzugt findet die erfindungsgemäße Vernetzung bei Temperaturen bis 220°C unter Luftatmosphäre und bei Temperaturen über 220°C unter Schutzgasatmosphäre statt.

Ein weiterer Gegenstand der vorliegenden Erfindung sind Formkörper, hergestellt durch Vernetzung der erfindungsgemäßen Zusammensetzungen.

Die erfindungsgemäßen Formkörper weisen vorzugsweise einen Elastizitätsmodul, gemessen bei 23°C, größer 0,70 GPa, bevorzugt größer 0,80 GPa, besonders bevorzugt größer 1,00 GPa, insbesondere größer 1,40 GPa, auf.

Die erfindungsgemäßen Formkörper weisen vorzugsweise eine Biegefestigkeit $\sigma_{fM}$, gemessen bei 23°C, größer 20 MPa, bevorzugt größer 30 MPa, besonders bevorzugt größer 40 MPa, insbesondere größer 50 MPa, auf.

Vorzugsweise weisen die erfindungsgemäßen Formkörper ein tan delta$_{max}$ von mindestens 0,400, bevorzugt von mindestens 0,500, besonders bevorzugt von mindestens 0,600, insbesondere von mindestens 0,700, auf.

Vorzugsweise weisen die erfindungsgemäßen Formkörper eine Halbwertsbreite, definiert als die Peakbreite bei tan delta$_{max}$/2, ≤30°C, bevorzugt ≤25°C, besonders bevorzugt ≤20°C, auf.

Vorzugsweise weisen die erfindungsgemäßen Formkörper im Druckversuch, gemessen bei 25°C, eine Druckfließspannung $\sigma_y$ auf, welche definiert ist als die Spannung, bei der zum ersten Mal ein Anstieg der Stauchung ohne einen Anstieg der Spannung erfolgt (siehe DIN EN ISO 604:2003-12, Kapitel 3.3.1) und an einem Spannungsmaximum in der Spannungs-/Stauchungskurve (siehe DIN EN ISO 604:2003-12, Kapitel 4, Bild 1, Kurve a) erkennbar ist, gefolgt von einem Abfall der Spannung bei weiterem Anstieg der Stauchung nach $\sigma_y$ (Dehnungserweichung).

Vorzugsweise weisen die erfindungsgemäßen Formkörper ein Fließverhältnis, gemessen bei 25°C, kleiner 1,30, bevorzugt kleiner 1,25, besonders bevorzugt kleiner 1,20, insbesondere kleiner 1,15, auf.

Die erfindungsgemäßen Formkörper haben den Vorteil, dass sie hohe Festigkeiten, d.h. hohe Elastizitätsmodul- und Biegefestigkeitswerte, mit guten Fließeigenschaften, d.h. ein niedriges Fließverhältnis $\sigma_{20\%}$:$\sigma_y$, und eine homogene Netzwerkstruktur, erkennbar an einem hohen Dämpfungsmaximum tan delta$_{max}$ bei der Glasübergangstemperatur (Tg) und einer geringen Halbwertsbreite, kombinieren.

Die erfindungsgemäßen Zusammensetzungen haben den Vorteil, dass sie bei einer Temperatur von 23°C flüssig und gut verarbeitbar sind.

Die erfindungsgemäßen Zusammensetzungen haben den Vorteil, dass sie aus leicht zugänglichen Stoffen nach gängigen Verfahren hergestellt werden können .

Die erfindungsgemäßen Zusammensetzungen haben den Vorteil, dass sie bei einer Temperatur von 23°C flüssig und gut verarbeitbar sind.

Das erfindungsgemäß Verfahren hat den Vorteil, dass es einfach durchführbar ist.

**Viskositätsmessung**

Im Rahmen der vorliegenden Erfindung wird die dynamische Viskosität nach DIN 53019 bei einer Temperatur, sofern nicht anders angegeben, von 23°C und einem Luftdruck von 1013 hPa bestimmt. Die Messung wird mit einem Rotationsrheometer "Physica MCR 300" von der Firma Anton Paar durchgeführt. Dabei wird für Viskositäten von 1 bis 200 mPa·s ein koaxiales Zylinder-Messsystem (CC 27) mit einem Ring-Messspalt von 1,13 mm genutzt und für Viskositäten von größer als 200 mPa·s ein Kegel-Platte-Messsystem (Searle-System mit Messkegel CP 50-1) verwendet. Die Schergeschwindigkeit wird der Polymerviskosität angepasst (1 bis 99 mPa·s bei 100 s$^{-1}$; 100 bis 999 mPa·s bei 200 s$^{-1}$; 1000 bis 2999 mPa·s bei 120 s$^{-1}$; 3000 bis 4999 mPa·s bei 80 s$^{-1}$; 5000 bis 9999 mPa·s bei 62 s$^{-1}$; 10000 bis 12499 mPa·s bei 50 s$^{-1}$; 12500 bis 15999 mPa·s bei 38,5 s$^{-1}$; 16000 bis 19999 mPa·s bei 33 s$^{-1}$; 20000 bis 24999 mPa·s bei 25 s$^{-1}$; 25000 bis 29999 mPa·s bei 20 s$^{-1}$; 30000 bis 39999 mPa·s bei 17 s$^{-1}$; 40000 bis 59999 mPa·s bei 10 s$^{-1}$; 60000 bis 149999 bei 5 s$^{-1}$; 150000 bis 199999 mPa·s bei 3,3 s$^{-1}$; 200000 bis 299999 mPa·s bei 2,5 s$^{-1}$; 300000 bis 1000000 mPa·s bei 1,5 s$^{-1}$.

Nach Temperierung des Messsystems auf die Messtemperatur wird ein dreistufiges Messprogramm bestehend aus einer Einlaufphase, einer Vorscherung und einer Viskositäts-Messung angewandt. Die Einlaufphase erfolgt durch stufenweise Erhöhung der Schergeschwindigkeit innerhalb einer Minute auf die oben angegebene von der zu erwartenden Viskosität abhängige Schergeschwindigkeit bei der die Messung erfolgen soll. Sobald diese erreicht ist, erfolgt bei konstanter Schergeschwindigkeit die Vorscherung für 30 s, anschließend werden zur Bestimmung der Viskosität 25 Einzelmessungen für je 4,8 s durchgeführt, aus denen der Mittelwert bestimmt wird. Der Mittelwert entspricht der dynamischen Viskosität, die in mPa·s angegeben wird.

**Herstellung der zylindrischen Probekörper**

Zur Durchführung der DMA, der Biegefestigkeits- und Druckversuch-Messungen wurden die Probekörper aus zylinderförmigen Vulkanisaten hergestellt. Die zylinderförmigen Vulkanisate wurden in Edelstahlröhrchen mit den Dimensionen Länge x Innendurchmesser = 150 mm x 10 mm, welche einseitig mit einer Schraubverschluss-Kappe aus Edelstahl verschlossen waren, hergestellt. Um ein Anhaften der Cyclosiloxan-Zusammensetzungen zu vermeiden befand sich innenliegend im Schraubverschluss eine Bodendichtung aus Polytetrafluorethylen; die Innenflächen der Edelstahlröhrchen wurden mit WACKER® SILICONE PASTE P unter Zuhilfenahme einer passenden Reagenzglasbürste vor dem Einfüllen der Siloxan-Zusammensetzungen dünn benetzt, anschließend wurden die Röhrchen 2 Stunden bei 180°C gelagert. Danach wurden die Röhrchen mit der Cyclosiloxan-Zusammensetzung befüllt und 72 Stunden bei 180°C im Umluftofen und anschließend weitere 2 Stunden bei 250°C im Umluftofen mit Stickstoffatmosphäre ausgehärtet. Dabei wurden die Edelstahlröhrchen aufrecht mit der offenen Seite nach oben gerichtet aufgestellt. Anschließend ließ man die Probekörper in den Röhrchen auf 23°C abkühlen bevor die Probekörper entformt wurden. Für die weitere Verwendung wurden die oberen 20 mm der Probekörper-Seite, die während der Aushärtung offen war, verworfen.

**Dynamisch mechanische Analyse (DMA)**

Messbedingungen:

- Messgerät: ARES-Rheometer (TA-Instruments)
- Temperaturbereich: -100°C - 300°C
- Heizrate: 4 K/min mit Stickstoffspülung
- Frequenz: 1 Hz
- Strain: Initial 0,03 %, automatisch erhöht, wenn Messsignal unter Schwellenwert

Für die Untersuchungen wurden quaderförmige Prüfkörper in den Dimensionen Länge × Breite × Höhe = 40 mm × 6 mm × 3 mm aus den zylindrischen Probekörpern hergestellt; die resultierende Einspannlänge betrug 25 mm.

In der vorliegenden Erfindung entspricht tan delta der Dämpfung, d.h. dem Tangens des Phasenwinkels bzw. dem Verhältnis von Verlustmodul G″ zu Speichermodul G′; tan delta$_{max}$ ist definiert als das Dämpfungsmaximum tan delta (= Höchstwert der Tangens delta-Kurve) bei der Glasübergangstemperatur Tg.

In der vorliegenden Erfindung ist die Halbwertsbreite definiert als die Peakbreite der tan delta-Kurve in °C bei tan delta$_{max}$/2. Der in Tabelle 1 angegebene Wert für tan delta$_{max}$ wurde auf die dritte Nachkommastelle sowie für die Halbwertsbreite auf ganze Zahlen gerundet, jeweils entsprechend DIN1333:1992-02 Abschnitt 4.

**Druckversuch**

Im Rahmen der vorliegenden Erfindung wurden die Druckeigenschaften (Fließspannung) in Anlehnung an die Norm DIN EN ISO 604:2003-12 durchgeführt.
Messbedingungen:

- Messgerät: Instron Prüfmaschine 3369
- Kraftmessdose: 50 kN
- Druckstempel 50 mm,
- Prüfgeschwindigkeit: 1 mm/min
- Temperatur: 25°C, 28% rel. Feuchte
- Vorkraft: 40 N
- Schmiermittel: ohne

Probenvorbereitung: Für die Untersuchungen wurden zylindrische Prüfkörper mit einem Durchmesser von 9,5 mm und mit einer Höhe von 17 mm hergestellt. Der Druckversuch wurde an 3 Prüfkörpern eines Probekörpers durchgeführt. Die Probekörper wurden bis etwa 4,5 mm Stauchung, also etwa 26% bezogen auf die Ausgangshöhe, belastet und verformten sich bis zum Ende der Messung praktisch ideal tonnenförmig (bauchig). Zur Beurteilung der Material-Fließeigenschaft wurde das Fließverhältnis, definiert als der Quotient von der Druckspannung $\sigma$ in MPa bei 20% Stauchung und der Druckfließspannung $\sigma_y$ (siehe DIN EN ISO 604:2003-12, Kapitel 3.3.1) herangezogen. Der in Tabelle 1 angegebene Wert für das Fließverhältnis entspricht dem jeweiligen Mittelwert der drei Einzelmessungen, gerundet auf die zweite Nachkommastelle entsprechend DIN 1333:1992-02 Abschnitt 4.

**Biegefestigkeit**

In der vorliegenden Erfindung wurde die Biegefestigkeit und der Biege-Elastizitätsmodul nach ISO 178:2011-04 Verfahren A mit einer Prüfgeschwindigkeit von 5 mm/min bei einer Auflagedistanz L von 60 mm gemessen. Die Messungen wurden bei 23°C und 50% relative Feuchte durchgeführt. Dabei wurde bevorzugt wie folgt vorgegangen: Es wurden zylinderförmige Prüfkörper in den Dimensionen Länge $\times$ Durchmesser = 100 mm $\times$ 9,5 mm verwendet. Die Messungen wurden an jeweils 5 Prüfkörpern durchgeführt. Die Biegefestigkeit $\sigma_{fM}$ (maximale Biegespannung, die während der Prüfung von dem Probekörper ertragen wird (siehe ISO 178:2011-04, Seite 6, Kapitel 3.4)) wurde berechnet nach der Gleichung $\sigma_{fm} = \dfrac{6 \times L \times \sigma_f}{\pi \times \emptyset^3}$ , wobei L die Auflagedistanz von 60 mm, $\sigma_f$ die gemessene Biegespannung in Newton und 0 der Probekörperdurchmesser in mm ist. Der Biege-Elastizitätsmodul $E_f$ wurde berechnet nach der Gleichung $E_f = \dfrac{L^3 \times (\sigma_{f2} - \sigma_{f1})}{0{,}15 \, mm \times \pi \times \emptyset^4}$ , wobei L die Auflagedistanz von 60 mm, $\sigma_{f1}$ die gemessene Biegespannung bei 0,10 mm Durchbiegung in Kilonewton (kN), $\sigma_{f2}$ die gemessene Biegespannung bei 0,25 mm Durchbiegung in Kilonewton (kN) und Ø der Probekörperdurchmesser in mm ist. Der in Tabelle 1 angegebene Wert für die Biegefestigkeit $\sigma_{fM}$ in MPa und den Biege-Elastizitätsmodul $E_f$ in GPa entspricht dem jeweiligen Mittelwert der Einzelmessungen, gerundet auf ganze Zahlen (Biege-Elastizitätsmodul) bzw. auf eine Nachkommastelle (Biegefestigkeit) entsprechend DIN 1333:1992-02 Abschnitt 4.

**Molmassen**

Im Rahmen der vorliegenden Erfindung werden die Zahlenmittel-Molmasse Mn und die Gewichtsmittel-Molmasse Mw, jeweils in der Einheit g/mol, gerundet auf ganze 10er Zahlen entsprechend DIN 1333:1992-02 Abschnitt 4, mit Größenausschlusschromatographie (SEC/GPC) entsprechend DIN 55672-1/ISO 160414-1 sowie ISO 160414-3 bestimmt, indem ein Säulensatz basierend auf Polystyrol-co-Divinylbenzol als stationärer Phase aus drei Säulen unterschiedlicher Porengrößenverteilung der Reihenfolge nach 10000 Å, 500 Å und 100 Å mit einer Ausschlussgröße von größer als 450,000 g/mol gegen Polystyrol-Standards kalibriert wird. Phenyl-haltige Komponenten werden mit THF als Eluent bestimmt, nicht-phenyl-haltige mit Toluol als Eluent. Die Analysen werden bei einer Säulentemperatur von $45 \pm 1$°C

und mittels Brechungsindex-Detektor durchgeführt.

In den nachfolgenden Beispielen beziehen sich alle Angaben von Teilen und Prozentsätzen, soweit nicht anders angegeben, auf das Gewicht. Sofern nicht anders angegeben, werden die folgenden Beispiele bei einem Druck der umgebenden Atmosphäre, also bei etwa 1013 hPa, und bei Raumtemperatur, also etwa 23°C bzw. einer Temperatur, die sich beim Zusammengeben der Reaktanden bei Raumtemperatur ohne zusätzliche Heizung oder Kühlung einstellt, durchgeführt.

Im Folgenden bedeutet

Me gleich Methylrest, Vi gleich Vinylrest, Et gleich Ethylrest, Ph gleich Phenylrest.

**Beispiel 1**

**Cyclengemisch 1**

Unter Stickstoffatmosphäre wurden 52,92 g (630 mmol) wasserfreies Natriumhydrogencarbonat (käuflich erhältlich bei der Sigma-Aldrich Chemie GmbH, D-Steinheim) und 49,84 g (630 mmol) wasserfreies Pyridin (käuflich erhältlich bei der Sigma-Aldrich Chemie GmbH, D-Steinheim) in 250 ml trockenem Aceton (≤0,01% Wasser; käuflich erhältlich bei der VWR International GmbH, D-Darmstadt) vorgelegt. Dann wurden 128,00g (630 mmol) Vinylphenyldichlorsilan (käuflich erhältlich bei der Gelest, Inc., 11 East Steel Rd., Morrisville, PA 19067), gelöst in 190 ml trockenem Aceton, innerhalb von 1 Stunde hinzugetropft, und die Mischung wurde dann 3 Stunden bei Raumtemperatur gerührt. Anschließend wurde die Mischung filtriert und der feste Rückstand mit 180 ml trockenem Aceton gewaschen. Von den vereinigten Filtraten wurden das Lösungsmittel und flüchtige Komponenten bei 80°C und 1 mbar entfernt und der ölige Rückstand nochmals filtriert. Es wurden 88,6 g eines farblosen Öls (Cyclengemisch 1) erhalten, welches entsprechend der $^{29}$Si-NMR-Analyse 55 mol% $(PhViSiO_{2/2})_3$ und 26 mol% $(PhViSiO_{2/2})_4$ enthielt sowie 19 mol% lineare Siloxane der durchschnittlichen Zusammensetzung $(PhViSiO_{2/2})_{7,5}(PhVi(OH)SiO_{1/2})_2$.

50,00 g des oben hergestellten Cyclengemischs 1 wurden mit 34,40 g 1,4-Bis(dimethylsilyl)benzol (CAS 2488-01-9; käuflich erhältlich bei der abcr GmbH, D-Karlsruhe) in einem Speedmixer™ DAC 150 FVZ von der Firma Hauschild & Co. KG 10 Sekunden bei 3000 Umdrehungen/min vermischt, danach wurden der Mischung 0,05 g Platinkatalysator (käuflich erhältlich unter der Bezeichnung WACKER® KATALYSATOR OL bei der Wacker Chemie AG, D-München); die Mischung wurde im Speedmixer™ DAC 150 FVZ 30 Sekunden bei 3000 Umdrehungen/min vermischt, in die Edelstahlzylinderformen gegossen und ausgehärtet und anschließend untersucht. Die Ergebnisse der Messungen sind in Tabelle 1 zusammengefasst.

**Beispiel 2**

Die in Beispiel 1 beschriebene Verfahrensweise wurde wiederholt mit der Abänderung, dass anstelle des Cyclengemischs 1 50,0 g 1,3,5-Trimethyl-1,3,5-trivinylcyclotrisiloxan (CAS 3901-77-7; käuflich erhältlich bei der aber GmbH, D-Karlsruhe) und 59,23 g 1,4-Bis(dimethylsilyl)benzol eingesetzt wurden. Die Ergebnisse der Messungen sind in Tabelle 1 zusammengefasst.

**Beispiel 3**

Die in Beispiel 1 beschriebene Verfahrensweise wurde wiederholt mit der Abänderung, dass anstelle von 34,4 g 1,4-Bis(dimethyl-silyl)benzol 47,76 g 4,4'-Bis(dimethylsilyl)biphenyl eingesetzt wurden. Die Ergebnisse der Messungen sind in Tabelle 1 zusammengefasst.

**Vergleichsbeispiel 1 (V1)**

Die in Beispiel 1 beschriebene Verfahrensweise wurde wiederholt mit der Abänderung, dass anstelle des Cyclengemischs 1 50,0 g 1,3,5,7-Tetramethyl-1,3,5,7-tetravinylcyclotetrasiloxan (CAS 2554-06-5; käuflich erhältlich bei der abcr GmbH, D-Karlsruhe) und 59,23 g 1,4-Bis(dimethylsilyl)benzol eingesetzt wurden. Die Ergebnisse der Messungen sind in Tabelle 1 zusammengefasst.

Tabelle 1

| Beispiel | 1 | 2 | 3 | V1 |
|---|---|---|---|---|
| Biege-Elastizitätsmodul bei 23°C [GPa] | 1,5 | 1,1 | 1,5 | 0,9 |

(fortgesetzt)

| Beispiel | 1 | 2 | 3 | V1 |
|---|---|---|---|---|
| Biegefestigkeit $\sigma_{fM}$ bei 23°C [MPa] | 61 | 46 | 82 | 40 |
| tan delta$_{max}$ | 0,879 | 1,386 | 0,757 | 0,746 |
| Halbwertsbreite [°C] | 14 | 9 | 24 | 12 |
| Fließverhältnis $\sigma_{20\%}:\sigma_y$ bei 25°C | 1,09 | 0,78 | 1,14 | 1,02 |

**Patentansprüche**

1. Durch Hydrosilylierungsreaktion vernetzbare Zusammensetzungen enthaltend

   (A) Cyclosiloxane der Formel

   $$[R_aR^1{}_bR^2{}_cSiO_{2/2}]_m \qquad (I) ,$$

   wobei

   R Methyl-, n-Butyl-, tert-Butyl-, Cyclohexyl-, n-Octyl-, 2-Ethylhexyl-, 2,2,4-Trimethylpentyl- oder 2,4,4-Trimethylpentylrest darstellt,
   $R^1$ Vinyl-, Bicycloheptenyl-, 3a,4,5,6,7,7a-hexahydro-4,7-methano-1H-indenyl- oder 2-Propenylrest bedeutet,
   $R^2$ Phenylrest, o-, m- oder p-Tolylrest oder Benzylrest bedeutet,
   a 0 oder 1 ist,
   b 0 oder 1 ist,
   c 0, 1 oder 2 ist, und
   m gleich 3, 4 oder 5 ist,
   mit der Maßgabe, dass
   a+b+c gleich 2 ist, pro Siloxanmolekül (A) mindestens 3 Reste $R^1$ anwesend sind und pro Siloxanmolekül (A) mindestens m-3 Reste $R^2$ anwesend sind,

   (B) Organosiliciumverbindungen mit zwei Si-gebundenen Wasserstoffatomen sowie mindestens einem aromatischen Rest und
   (C) die Anlagerung von Si-gebundenem Wasserstoff an aliphatische Mehrfachbindung fördernden Katalysator.

2. Zusammensetzungen gemäß Anspruch 1, **dadurch gekennzeichnet, dass** es sich bei Komponente (A) um Cyclotrisiloxane (A1) der Formel (I) mit m gleich 3, a=b=1 und c=0 handelt.

3. Zusammensetzungen gemäß Anspruch 1, **dadurch gekennzeichnet, dass** es sich bei Komponente (A) um aromatische Cyclosiloxane (A2) der Formel (I) mit m gleich 3, 4 oder 5 handelt, wobei pro Cyclosiloxanmolekül (A2) mindestens 3 Reste $R^1$ anwesend sind sowie mindestens eine Einheit mit a=0 und b=c=1 anwesend ist.

4. Zusammensetzungen gemäß Anspruch 3, **dadurch gekennzeichnet, dass** es sich bei Komponente (A) um (Ph(Bch) SiO$_{2/2}$)$_4$, (Ph(Dcp)SiO$_{2/2}$)$_4$, (Ph(Bch)SiO$_{2/2}$)$_3$, (Ph(Dcp) SiO$_{2/2}$)$_3$, (PhViSiO$_{2/2}$)$_3$, (PhViSiO$_{2/2}$)$_4$ oder (PhViSiO$_{2/2}$)$_5$ handelt, wobei Me gleich Methylrest, Vi gleich Vinylrest, Bch gleich Bicycloheptenylrest, Dcp gleich 3a,4,5,6,7,7a-hexahydro-4,7-methano-1H-indenylrest und Ph gleich Phenylrest bedeutet.

5. Zusammensetzungen gemäß einem oder mehreren der Ansprüche 1 bis 4, **dadurch gekennzeichnet, dass** es sich bei Koppler (B) um Organosiliciumverbindungen enthaltend Einheiten der Formel

   $$R^4{}_eH_fR^5{}_gSiO_{(4-e-f-g)/2} \qquad (II)$$

   handelt, worin

   $R^4$ gleich oder verschieden sein kann und einen einwertigen oder zweiwertigen, SiC-gebundenen, gegebenenfalls substituierten, aliphatisch gesättigten Kohlenwasserstoffrest bedeutet,

$R^5$ gleich oder verschieden sein kann und einen einwertigen oder zweiwertigen, SiC-gebundenen, gegebenenfalls substituierten, aromatischen, aliphatisch gesättigten Kohlenwasserstoffrest bedeutet,

e 0, 1, 2 oder 3 ist,

f 0, 1 oder 2 ist und

g 0, 1 oder 2 ist,

mit der Maßgabe, dass e+f+g $\leq$ 4 ist sowie pro Molekül zwei Si-gebundene Wasserstoffatome und mindestens ein aromatischer Rest anwesend sind.

6. Zusammensetzungen gemäß einem oder mehreren der Ansprüche 1 bis 5, **dadurch gekennzeichnet, dass** es sich bei Katalysator (C) um Platin sowie dessen Verbindungen und Komplexe handelt.

7. Zusammensetzungen gemäß Anspruch 1 oder 2, **dadurch gekennzeichnet, dass** es um solche handelt enthaltend

(A1) Cyclotrisiloxane,
(B) Koppler,
(C) Katalysator,
gegebenenfalls (D) Inhibitor,
gegebenenfalls (E) Zusatzstoffe und
gegebenenfalls (F) Lösungsmittel.

8. Zusammensetzungen gemäß Anspruch 1 oder 3, **dadurch gekennzeichnet, dass** es um solche handelt enthaltend

(A2) aromatische Cyclosiloxane,
(B) Koppler,
(C) Katalysator,
gegebenenfalls (D) Inhibitor,
gegebenenfalls (E) Zusatzstoffe und
gegebenenfalls (F) Lösungsmittel.

9. Verfahren zur Herstellung der Zusammensetzungen gemäß einem oder mehreren der Ansprüche 1 bis 8 durch Vermischung der einzelnen Komponenten.

10. Formkörper, hergestellt durch Vernetzung der Zusammensetzungen gemäß einem oder mehreren der Ansprüche 1 bis 8.

11. Formkörper gemäß Anspruch 10, **dadurch gekennzeichnet, dass** sie einen Elastizitätsmodul, gemessen bei 23°C, größer 0,70 GPa aufweisen.

**Claims**

1. Hydrosilylation-crosslinkable compositions containing

(A) cyclosiloxanes of formula

$$[R_a R^1_b R^2_c SiO_{2/2}]_m \qquad (I),$$

wherein

R represents methyl, n-butyl, tert-butyl, cyclohexyl, n-octyl, 2-ethylhexyl, 2,2,4-trimethylpentyl or 2,4,4-trimethylpentyl,
$R^1$ represents vinyl, bicycloheptenyl, 3a,4,5,6,7,7a-hex-ahydro-4,7-methano-1H-indenyl or 2-propenyl,
$R^2$ represents phenyl, o-, m- or p-tolyl or benzyl,
a is 0 or 1,
b is 0 or 1,
c is 0, 1 or 2, and
m is 3, 4 or 5,

with the proviso that
a+b+c is 2, at least 3 radicals $R^1$ are present per siloxane molecule (A) and at least m-3 radicals $R^2$ are present per siloxane molecule (A),

(B) organosilicon compounds having two Si-bonded hydrogen atoms and at least one aromatic radical and
(C) catalyst which promotes addition of Si-bonded hydrogen onto aliphatic multiple bond.

2. Compositions according to Claim 1, **characterized in that** component (A) is cyclotrisiloxanes (A1) of formula (I) where m is 3, a=b=1 and c=0.

3. Compositions according to Claim 1, **characterized in that** component (A) is aromatic cyclosiloxanes (A2) of formula (I) where m is 3, 4 or 5, wherein per cyclosiloxane molecule (A2) at least 3 radicals $R^1$ are present and at least one unit where a=0 and b=c=1 is present.

4. Compositions according to Claim 3, **characterized in that** component (A) is (Ph (Bch)SiO$_{2/2}$)$_4$, (Ph(Dcp)SiO$_{2/2}$)$_4$, (Ph(Bch)SiO$_{2/2}$)$_3$, (Ph (Dcp)SiO$_{2/2}$)$_3$, (PhViSiO$_{2/2}$)$_3$, (PhViSiC$_{2/2}$)$_4$ or (PhViSiC$_{2/2}$)$_5$, wherein Me is methyl, Vi is vinyl, Bch is bicycloheptenyl, Dcp is 3a,4,5,6,7,7a-hex-ahydro-4,7-methano-1H-indenyl and Ph is phenyl.

5. Compositions according to one or more of Claims 1 to 4, **characterized in that** coupler (B) is organosilicon compounds containing units of formula

$$R^4{}_e H_f R^5{}_g SiO_{(4-e-f-g)/2} \qquad (II)$$

wherein

$R^4$ may be identical or different and represents a monovalent or divalent, SiC-bonded, optionally substituted, aliphatically saturated hydrocarbon radical,
$R^5$ may be identical or different and represents a monovalent or divalent, SiC-bonded, optionally substituted, aliphatically saturated aromatic hydrocarbon radical,
e is 0, 1, 2 or 3,
f is 0, 1 or 2 and
g is 0, 1 or 2,
with the proviso that e+f+g is $\leq$ 4 and two Si-bonded hydrogen atoms and at least one aromatic radical are present per molecule.

6. Compositions according to one or more of Claims 1 to 5, **characterized in that** catalyst (C) is platinum and compounds and complexes thereof.

7. Compositions according to Claim 1 or 2, **characterized in that** they are compositions containing

(A1) cyclotrisiloxanes,
(B) coupler,
(C) catalyst,
optionally (D) inhibitor,
optionally (E) additives and
optionally (F) solvent.

8. Compositions according to Claim 1 or 3, **characterized in that** they are compositions containing

(A2) aromatic cyclosiloxanes,
(B) coupler,
(C) catalyst,
optionally (D) inhibitor,
optionally (E) additives and
optionally (F) solvent.

9. Process for producing the compositions according to one or more of Claims 1 to 8 by mixing the individual components.

**10.** Molded articles produced by crosslinking the compositions according to one or more of Claims 1 to 8.

**11.** Molded articles according to Claim 10, **characterized in that** they have an elastic modulus measured at 23°C of greater than 0.70 GPa.


**Revendications**

**1.** Compositions réticulables par une réaction d'hydrosilylation, contenant

(A) des cyclosiloxanes de formule

$$[R_a R^1_b R^2_c SiO_{2/2}]_m \qquad (I),$$

dans laquelle

R représente un radical méthyle, n-butyle, tert-butyle, cyclohexyle, n-octyle, 2-éthylhexyle, 2,2,4-triméthylpentyle ou 2,4,4-triméthylpentyle,
$R^1$ signifie un radical vinyle, bicycloheptényle, 3a,4,5,6,7,7a-hexahydro-4,7-méthano-1H-indényle ou 2-propényle,
$R^2$ signifie un radical phényle, un radical o-toluyle, m-toluyle ou p-toluyle ou un radical benzyle,
a vaut 0 ou 1,
b vaut 0 ou 1,
c vaut 0, 1 ou 2 et
m vaut 3, 4 ou 5,

sous réserve
que a + b + c vaille 2, que, par molécule de siloxane (A), au moins 3 radicaux $R^1$ soient présents et que, par molécule de siloxane (A), au moins m-3 radicaux $R^2$ soient présents,
(B) des composés organosiliciés présentant deux atomes d'hydrogène liés par Si ainsi qu'au moins un radical aromatique et
(C) un catalyseur favorisant l'addition d'hydrogène lié par Si sur une liaison aliphatique multiple.

**2.** Compositions selon la revendication 1, **caractérisées en ce qu'**il s'agit, pour le composant (A), de cyclotrisiloxane (A1) de formule (I) dans laquelle m vaut 3, a = b = 1 et c = 0.

**3.** Compositions selon la revendication 1, **caractérisées en ce qu'**il s'agit, pour le composant (A), de cyclosiloxanes aromatiques (A2) de formule (I) dans laquelle m vaut 3, 4 ou 5, où, par molécule de cyclosiloxane (A2), au moins 3 radicaux $R^1$ sont présents ainsi qu'au moins un motif dans lequel a = 0 et b = c = 1 est présent.

**4.** Compositions selon la revendication 3, **caractérisées en ce qu'**il s'agit, pour le composant (A), de (Ph (Bch)SiO$_{2/2}$)$_4$, (Ph (Dcp)SiO$_{2/2}$)$_4$, (Ph (Bch)SiO$_{2/2}$)$_3$, (Ph (Dcp)SiO$_{2/2}$)$_3$, (PhViSiO$_{2/2}$)$_3$, (PhViSiO$_{2/2}$)$_4$ ou (PhViSiC$_{2/2}$)$_5$, Me signifiant un radical méthyle, Vi signifiant un radical vinyle, Bch signifiant un radical bicycloheptényle, Dcp signifiant un radical 3a,4,5,6,7,7a-hexahydro-4,7-méthano-1H-indényle et Ph signifiant un radical phényle.

**5.** Compositions selon l'une ou plusieurs des revendications 1 à 4, **caractérisées en ce qu'**il s'agit, pour l'agent de couplage (B), de composés organosiliciés contenant des motifs de formule

$$R^4_e H_f R^5_g SiO_{(4-e-f-g)/2} \qquad (II)$$

dans laquelle

$R^4$ peut être identique ou différent et signifie un radical hydrocarboné monovalent ou divalent, lié par SiC, le cas échéant substitué, aliphatiquement saturé,
$R^5$ peut être identique ou différent et signifie un radical hydrocarboné monovalent ou divalent, lié par SiC, le cas échéant substitué, aromatique, aliphatiquement saturé,
e vaut 0, 1, 2 ou 3,
f vaut 0, 1 ou 2 et

g vaut 0, 1 ou 2, sous réserve que e + f + g ≤ 4 et que, par molécule, deux atomes d'hydrogène liés par Si et au moins un radical aromatique soient présents.

6. Compositions selon l'une ou plusieurs des revendications 1 à 5, **caractérisées en ce qu'**il s'agit, pour le catalyseur (C), de platine ainsi que de ses composés et complexes.

7. Compositions selon la revendication 1 ou 2, **caractérisées en ce qu'**il s'agit de compositions contenant

   (A1) des cyclotrisiloxanes
   (B) des agents de couplage
   (C) un catalyseur,
   le cas échéant (D) un inhibiteur,
   le cas échéant (E) des additifs et
   le cas échéant (F) des solvants.

8. Compositions selon la revendication 1 ou 3, **caractérisées en ce qu'**il s'agit de compositions contenant

   (A2) des cyclosiloxanes aromatiques,
   (B) des agents de couplage
   (C) un catalyseur,
   le cas échéant (D) un inhibiteur,
   le cas échéant (E) des additifs et
   le cas échéant (F) des solvants.

9. Procédé pour la préparation des compositions selon l'une ou plusieurs des revendications 1 à 8, par mélange de différents composants.

10. Corps façonnés, préparés par réticulation des compositions selon l'une ou plusieurs des revendications 1 à 8.

11. Corps façonnés selon la revendication 10, **caractérisés en ce qu'**ils présentent un module d'élasticité, mesuré à 23°C, supérieur à 0,70 GPa.

**IN DER BESCHREIBUNG AUFGEFÜHRTE DOKUMENTE**

**In der Beschreibung aufgeführte Patentdokumente**

- US 3438936 A
- WO 2012129766 A
- EP 0252858 A
- JP 2017193702 A
- EP 110370 B

**In der Beschreibung aufgeführte Nicht-Patentliteratur**

- **ZUEV, V. ; KALININ, A. V.** *Phosphorus Sulfur and Silicon,* 2003, vol. 178, 1289-1294
- *CHEMICAL ABSTRACTS,* 775-12-2
- *CHEMICAL ABSTRACTS,* 766-08-5
- *CHEMICAL ABSTRACTS,* 6689-22-1
- *CHEMICAL ABSTRACTS,* 2488-01-9
- *CHEMICAL ABSTRACTS,* 849830-54-2
- *CHEMICAL ABSTRACTS,* 873311-51-4
- *CHEMICAL ABSTRACTS,* 400758-55-6
- *CHEMICAL ABSTRACTS,* 68478-92-2
- *CHEMICAL ABSTRACTS,* 3901-77-7
- *CHEMICAL ABSTRACTS,* 2554-06-5